# EUROPÄISCHE PATENTSCHRIFT

(11) **EP 1 733 922 B1**
(45) Veröffentlichungstag und Bekanntmachung des Hinweises auf die Patenterteilung: **20.08.2008**
(21) Anmeldenummer: 06010593.9
(22) Anmeldetag: 23.05.2006
(51) Int. Cl.: B60R 1/00, B60Q 1/48, B62D 35/00

(54) **Kraftfahrzeug, insbesondere Personenkraftwagen**
Motor vehicle, particularly passenger vehicle
Véhicule automobile en particulier véhicule de passagers

(30) Priorität: 16.06.2005 DE 102005027750
(43) Veröffentlichungstag der Anmeldung: 20.12.2006
(73) Patentinhaber: Dr. Ing. h.c. F. Porsche Aktiengesellschaft, 70435 Stuttgart (DE)
(72) Erfinder: Adams, Stefan, 75181 Pforzheim-Hohenwart (DE)

(56) Entgegenhaltungen:
- DE-A1- 4 323 944
- DE-A1- 4 410 895
- DE-C1- 19 652 692
- FR-A- 2 543 083
- GB-A- 2 254 590
- PATENT ABSTRACTS OF JAPAN Bd. 016, Nr. 082 (M-1215), 27. Februar 1992 (1992-02-27) & JP 03 266740 A (TOSHIBA CORP; others: 01), 27. November 1991 (1991-11-27)

## Beschreibung

Die Erfindung betrifft ein Kraftfahrzeug, insbesondere einen Personenkraftwagen, mit einer im Heckbereich angeordneten, aus einer eingefahrenen Ruhestellung in eine ausgefahrene Betriebsstellung verlagerbaren Luftleitvorrichtung, und mit einer Parkassistenzvorrichtung.

Die FR 2 543 083 A1 beschreibt ein gattungsgemäßes Kraftfahrzeug, bei der ein schwenkbarer Träger am Fahrzeugheck angeordnet ist, an dessen Innenseite ein Spiegel angebracht ist. Ist der Träger in einer eingefahrenen Ruhestellung, kann über den verdeckten Spiegel die Umgebung am Heckbereich des Kraftfahrzeugs nicht eingesehen werden. Ist der Träger in einer ausgefahrenen Wirkstellung, kann aus dem Innern des Kraftfahrzeugs über den Spiegel der Heckbereich eingesehen werden. In der ausgefahrenen Wirkstellung kann ein Luftstrom an dem Träger umgeleitet werden.

Aus der deutschen Offenlegungsschrift DE 199 43 293 A1 ist ein Kraftfahrzeug bekannt, bei dem Ultraschallwandler in eine hintere Stoßfängereinrichtung integriert sind. Aus der deutschen Offenlegungsschrift DE 197 05 834 A1 ist eine mit Mikrowellen arbeitende Abstandmesseinrichtung bekannt, die hinter dicht geschlossenen Kunststoffblenden eines Kraftfahrzeugs, wie Stoßfänger, Spoiler, Seitenstoßleisten und ähnliches, angeordnet werden können. Aus der deutschen Offenlegungsschrift DE 199 29 909 A1 ist es bekannt, Antennen in Form von Metallfolie von innen an einen Dachheckspoiler zu kleben oder in den Dachheckspoiler einzugießen. Aus der deutschen Patentschrift DE 196 52 692 C1 ist ein Kraftfahrzeug mit einer im Heckbereich angeordneten, von einer eingefahrenen Ruhestellung in eine ausgefahrene Betriebsstellung verlagerbaren Luftleitvorrichtung bekannt. An einem quer verlaufenden hinteren Randbereich der ausfahrbaren Luftleitvorrichtung ist eine zusätzliche Bremsleuchte vorgesehen.

Aufgabe der Erfindung ist es, den Benutzungskomfort für die Parkassistenzvorrichtung in einem Kraftfahrzeug zu verbessern.

Die Aufgabe ist bei einem Kraftfahrzeug, insbesondere einem Personenkraftwagen, mit einer im Heckbereich angeordneten, aus einer eingefahrenen Ruhestellung in eine ausgefahrene Betriebsstellung verlagerbaren Luftleitvorrichtung, und mit einer Parkassistenzvorrichtung mit den Merknalen des Anspruches 1, gelöst, wenn die an der ausfahrbaren Luftleitvorrichtung angebrachte Parkassistenzvorrichtung in der eingefahrenen Ruhestellung der Luftleitvorrichtung verdeckt ist und wenn die Parkassistenzvorrichtung nicht aktiviert ist, wenn die Luftleitvorrichtung in ihrer voll ausgefahrenen Betriebsstellung ist. Das liefert den Vorteil, dass die Parkassistenzvorrichtung nur in der ausgefahrenen Betriebsstellung der Luftleitvorrichtung den Umgebungseinflüssen ausgesetzt ist. Durch die verdeckte, geschützte Anordnung der Parkassistenzvorrichtung in der Ruhestellung der Luftleitvorrichtung kann die Verschmutzung der Parkassistenzvorrichtung reduziert und deren Lebensdauer deutlich erhöht werden. Im teilweise ausgefahrenen Zustand der Luftleitvorrichtung ist die Parkassistenzvorrichtung so angeordnet, dass sie den Raum hinter und gegebenenfalls neben dem Kraftfahrzeug zumindest teilweise erfasst. Die Begriffe vorne/hinten und vordere/hintere beziehen sich auf die Fahrzeuglängsrichtung.

Ein bevorzugtes Ausführungsbeispiel des Kraftfahrzeugs ist dadurch gekennzeichnet, dass die Parkassistenzvorrichtung an einem quer verlaufenden hinteren Randbereich der ausfahrbaren Luftleitvorrichtung angeordnet ist. Dadurch wird sichergestellt, dass die Parkassistenzvorrichtung in der ausgefahrenen Betriebsstellung der Luftleitvorrichtung im Windschatten des fahrenden Kraftfahrzeugs angeordnet ist.

Ein weiteres bevorzugtes Ausführungsbeispiel des Kraftfahrzeugs ist dadurch gekennzeichnet, dass die Parkassistenzvorrichtung in eine an der Hinterseite der ausfahrbaren Luftleitvorrichtung angeordnete Aufnahme eingesetzt ist. Die Aufnahme dient dazu, die Parkassistenzvorrichtung vor dem Fahrtwind zu schützen, wenn die Luftleitvorrichtung in ihrer ausgefahrenen Betriebsstellung angeordnet ist.

Ein weiteres bevorzugtes Ausführungsbeispiel des Kraftfahrzeugs ist dadurch gekennzeichnet, dass die Luftleitvorrichtung einen Antrieb aufweist, durch den die Luftleitvorrichtung mit Hilfe einer Steuereinrichtung ausgefahren wird, sobald ein Rückwärtsgang eingelegt wird. Dadurch wird sichergestellt, dass die Luftleitvorrichtung ausgefahren wird, wenn die Parkassistenzvorrichtung benötigt wird.

Ein weiteres bevorzugtes Ausführungsbeispiel des Kraftfahrzeugs ist dadurch gekennzeichnet, dass die Parkassistenzvorrichtung so geschaltet ist, dass die Parkassistenzvorrichtung aktiviert wird, sobald der Rückwärtsgang eingelegt wird. Die Parkassistenzvorrichtung wird vorzugsweise nur dann aktiviert, wenn der Rückwärtsgang eingelegt und die Luftleitvorrichtung ausgefahren wird.

Ein weiteres bevorzugtes Ausführungsbeispiel des Kraftfahrzeugs ist dadurch gekennzeichnet, dass die Luftleitvorrichtung so geschaltet ist, dass die Luftleitvorrichtung, sobald der Rückwärtsgang eingelegt wird, nicht vollständig ausgefahren wird, sondern nur in eine Zwischenstellung bewegt wird. In der Zwischenstellung ist gewährleistet, dass der Raum hinter dem Kraftfahrzeug im Erfassungsbereich der Parkassistenzvorrichtung liegt.

Ein weiteres bevorzugtes Ausführungsbeispiel des Kraftfahrzeugs ist dadurch gekennzeichnet, dass die Parkassistenzvorrichtung mindestens einen Abstandssensor umfasst. Der Abstandssensor dient dazu, den Abstand zu Gegenständen, die hinter und/oder seitlich von dem Kraftfahrzeug angeordnet sind, zu erfassen. Der erfasste Abstandswert wird dem Fahrer zum Beispiel durch eine optische und/oder akustische Signaleinrichtung mitgeteilt.

Ein weiteres bevorzugtes Ausführungsbeispiel des Kraftfahrzeugs ist dadurch gekennzeichnet, dass die Parkassistenzvorrichtung mindestens einen Ultraschallsensor umfasst. Vorzugsweise umfasst die Parkassistenzvorrichtung mehrere Ultraschallsensoren.

Ein weiteres bevorzugtes Ausführungsbeispiel des Kraftfahrzeugs ist dadurch gekennzeichnet, dass die Parkassistenzvorrichtung eine Rückfahrkamera umfasst. Die Rückfahrkamera dient dazu, dem Fahrer des Kraftfahrzeugs ein Bild von dem Raum hinter dem Kraftfahrzeug auf einem Display anzuzeigen.

Ein weiteres bevorzugtes Ausführungsbeispiel des Kraftfahrzeugs ist dadurch gekennzeichnet, dass eine zusätzliche Bremsleuchte an der ausfahrbaren Luftleitvorrichtung angebracht ist. Die zusätzliche Bremsleuchte kann zum Beispiel zwischen zwei Abstandssensoren und/oder oberhalb beziehungsweise unterhalb einer Rückfahrkamera angeordnet sein.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine perspektivische Teilansicht von schräg hinten auf den Heckbereich einer Coupé Version eines Personenkraftwagens mit einer ausfahrbaren Luftleitvorrichtung;
- Figur 2: die Ansicht eines Schnitts entlang der Linie II-II in Figur 1, wobei die ausfahrbare Luftleitvorrichtung ihre eingefahrene Ruhestellung einnimmt;
- Figur 3: einen Schnitt entsprechend Figur 2, wobei die Luftleitvorrichtung eine teilweise ausgefahrene Zwischenstellung einnimmt und
- Figur 4: einen Schnitt entsprechend Figur 2, wobei die Luftleitvorrichtung ihre vollständig ausgefahrene Betriebsstellung einnimmt.

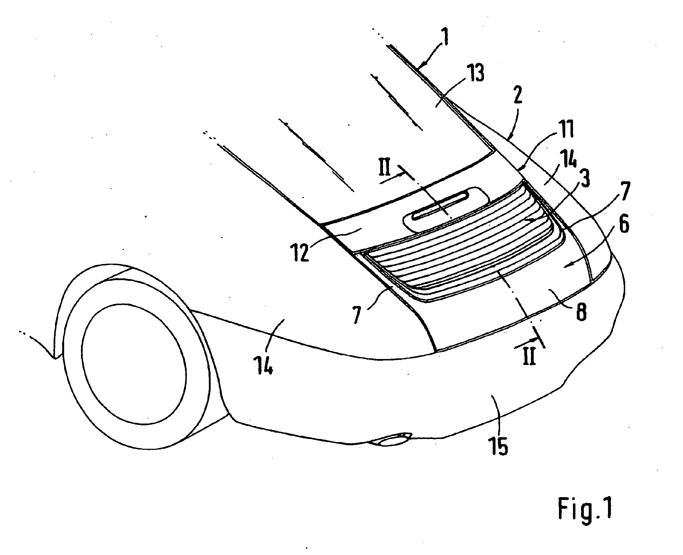

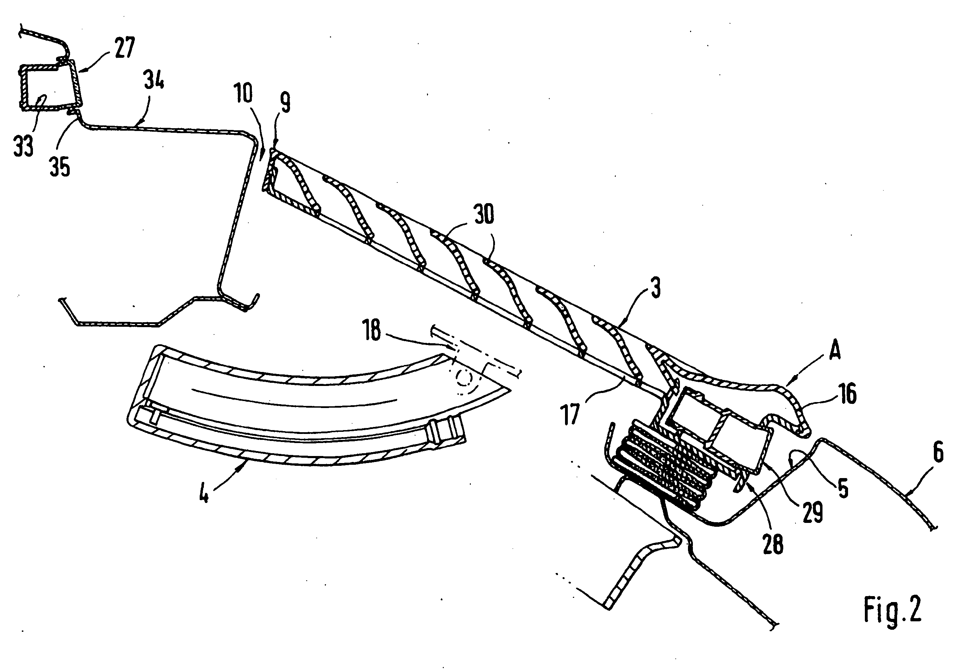

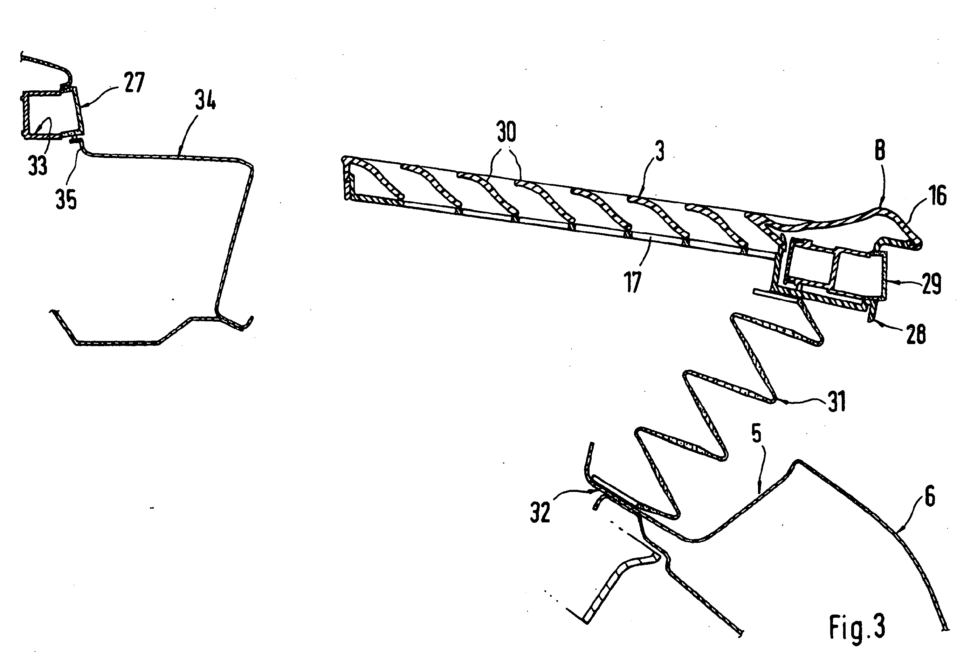

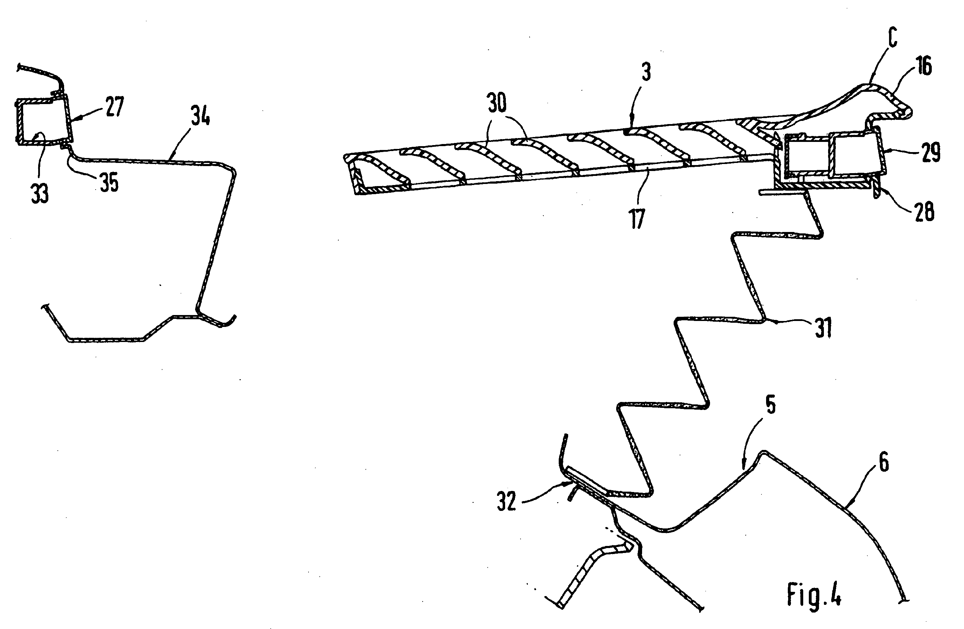

In den Figuren 1 bis 4 ist eine Coupé Version eines Personenkraftwagens 1 in verschiedenen Ansichten dargestellt, die im Heckbereich 2 eine ausfahrbare Luftleiteinrichtung 3 umfasst, die mittels einer Antriebsvorrichtung 4 von einer eingefahrenen Ruhestellung (A in Figur 2) über eine Zwischenstellung (B in Figur 3) in vollständig ausgefahrene Betriebsstellung (C in Figur 4) verlagerbar ist und umgekehrt.

Die Luftleitvorrichtung 3 ist in eine großflächige Einprägung 5 eines Heckdeckels 6 eingesetzt und verläuft in der Ruhestellung A etwa außenhautbündig zu seitlichen Schenkeln 7 und einer hinteren Kontur 8 des Heckdeckels 6. Die Vorderkante 9 der Luftleitvorrichtung 3 bildet den vorderen Rand des Heckdeckels 6 und verläuft unter Bildung eines schmalen Spaltes 10 zum angrenzenden Aufbauteil 11, das gemäß Figur 1 durch ein feststehendes Heckmittelteil 12 gebildet wird. Dem Heckmittelteil 12 vorgelagert erstreckt sich eine feststehende Heckscheibe 13.

Beiderseits der Heckscheibe 13, des Heckmittelteils 12 und des Heckdeckels 6 erstrecken sich hintere Seitenteile 14. Der untere Rand des Heckdeckels 6 und der Seitenteile 14 schließen an ein elastisches Heckendteil 15 an.

Die aus zwei Kunststoffschalen 16, 17 zusammengesetzte Luftleitvorrichtung 3 ist an ihrem oberen Rand über zwei beabstandet angeordnete Scharniere 18 mit dem darunter liegenden Heckdeckel 6 gelenkig verbunden. In einem weiter hinten liegenden Bereich der Luftleitvorrichtung 4 greift an der inneren Kunststoffschale 17 ein bewegbares Ende eines Ausstellers der Antriebsvorrichtung 4 an. Der Aussteller bewegt sich bei der Ausfahrbewegung der Luftleitvorrichtung entlang einer kreisbogenförmigen Bahn nach oben und nach hinten.

Die außen liegende Kunststoffschale 16 ist nach Art eines Lufteintrittsgitters mit quer laufenden Lamellen 30 ausgebildet, wobei durch einen an der Innenseite des Heckdeckels 6 angeordneten, nicht näher dargestellten Lüfter von der Fahrzeugaußenseite her Luft durch das Lufteintrittsgitter und eine am Heckdeckel 6 vorgesehene Öffnung nach innen angesaugt wird. Der hintere Randbereich 28 der ausgestellten Luftleitvorrichtung 4 ist über ein ziehharmonikaartiges Abdeckelement 31 mit einem Flansch 32 des Heckdeckels 6 verbunden.

An dem unmittelbar an die Vorderkante 9 der heckseitigen Luftleitvorrichtung 4 anschließenden Aufbauteil 11 ist eine lang gestreckte, zusätzliche Bremsleuchte 27 vorgesehen. Die zusätzliche Bremsleuchte 27 ist in eine Ausnehmung 33 einer nischenartigen Einprägung 34 des feststehenden Heckmittelteils 12 eingesetzt und dort mittels nicht näher dargestellter Befestigungselemente in Lage gehalten. Die Ausnehmung 33 ist an einem aufrecht ausgerichteten Wandabschnitt 35 der nischenförmigen Einprägung 34 angeordnet.

Erfindungsgemäß ist in einem quer verlaufenden, hinteren Randbereich 28 der ausfahrbaren Luftleitvorrichtung 3 eine Parkassistenzvorrichtung 29 vorgesehen. In der eingefahrenen Ruhestellung (A in Figur 2) der Luftleitvorrichtung 3 ist die Parkassistenzvorrichtung 29 verdeckt und von der Fahrzeugaußenseite her nicht sichtbar. In dieser Stellung der Luftleitvorrichtung 3 ist die Parkassistenzvorrichtung 29 nicht aktiviert.

In Figur 3 ist eine Zwischenstellung B der Luftleitvorrichtung 3 dargestellt. Die Luftleitvorrichtung 3 wird über eine (nicht dargestellte) Steuereinrichtung mit Hilfe der Antriebsvorrichtung 4 in die Zwischenstellung B bewegt, sobald ein Rückwärtsgang eingelegt wird. Wenn der Rückwärtsgang eingelegt wird, wird gleichzeitig die Parkassistenzvorrichtung 29 aktiviert. Die Parkassistenzvorrichtung 29 umfasst mehrere Abstandssensoren, die Ultraschallwellen aussenden und empfangen. Alternativ oder zusätzlich umfasst die Parkassistenzvorrichtung 29 eine Rückfahrkamera. Gemäß einem weiteren Aspekt der Erfindung ist in dem quer verlaufenden, hinteren Randbereich 28 der ausfahrbaren Luftleitvorrichtung 3 eine weitere, zusätzliche Bremsleuchte vorgesehen.

In Figur 4 ist die voll ausgefahrene Betriebsstellung C der Luftleitvorrichtung 3 dargestellt. Die Luftleitvorrichtung 3 wird mit Hilfe der Steuereinrichtung durch die Antriebsvorrichtung 4 in die Betriebsstellung C bewegt, wenn der Pkw 1 vorwärts fährt und eine bestimmte Geschwindigkeit überschreitet. In der voll ausgefahrenen Betriebsstellung C der Luftleitvorrichtung 3 ist die Parkassistenzvorrichtung 29 nicht aktiviert.

In Figur 2 ist die Ruhestellung A der Luftleitvorrichtung 3 dargestellt. In der Ruhestellung A ist die Parkassistenzvorrichtung 29 verdeckt und von der Fahrzeugaußenseite her nicht sichtbar. Dadurch kann eine deutlich geringere Verschmutzung der Abstandssensoren und/oder der Rückfahrkamera der Parkassistenzvorrichtung 29 gewährleistet werden. Außerdem besteht in der Ruhestellung A eine geringere Gefahr, dass die Parkassistenzvorrichtung 29 bei einem Heckaufprall beschädigt wird. Außerdem vereinfacht sich die Herstellung und Montage der Parkassistenzvorrichtung 29, da deren Teile nicht lackiert werden müssen.

## Patentansprüche

1. Kraftfahrzeug, insbesondere Personenkraftwagen, mit einer im Heckbereich (2) angeordneten, aus einer eingefahrenen Ruhestellung (A) in eine ausgefahrene Betriebsstellung (C) verlagerbaren Luftleitvorrichtung (3), und mit einer Parkassistenzvorrichtung (29), die so an der ausfahrbaren Luftleitvorrichtung (3) angebracht ist, dass sie in der eingefahrenen Ruhestellung (A) der Luftleitvorrichtung (3) verdeckt ist, **dadurch gekennzeichnet, dass** die Luftleitvorrichtung (3) einen Antrieb (4) aufweist, durch den die Luftleitvorrichtung (3) mit Hilfe einer Steuereinrichtung ausgefahren wird, sobald ein Rückwärtsgang eingelegt wird, dass die Luftleitvorrichtung (3) so geschaltet ist, dass die Luftleitvorrichtung, sobald der Rückwärtsgang eingelegt wird, nicht vollständig ausgefahren wird, sondern nur in eine Zwischenstellung (B) bewegt wird, und dass die Parkassistenzvorrichtung (29) in der voll ausgefahrenen Betriebsstellung (C) der Luftleitvorrichtung (3) nicht aktiviert ist.

2. Kraftfahrzeug nach Anspruch 1, **dadurch gekennzeichnet, dass** die Parkassistenzvorrichtung (29) an einem quer verlaufenden hinteren Randbereich (28) der ausfahrbaren Luftleitvorrichtung (3) angeordnet ist.

3. Kraftfahrzeug nach einem der vorhergehenden Ansprüche, **dadurch gekennzeichnet, dass** die Parkassistenzvorrichtung (29) in eine an der Hinterseite der ausfahrbaren Luftleitvorrichtung (3) angeordnete Aufnahme eingesetzt ist.

4. Kraftfahrzeug nach Anspruch 1, **dadurch gekennzeichnet, dass** die Parkassistenzvorrichtung (29) so geschaltet ist, dass die Parkassistenzvorrichtung aktiviert wird, sobald der Rückwärtsgang eingelegt wird.

5. Kraftfahrzeug nach einem der vorhergehenden Ansprüche, **dadurch gekennzeichnet, dass** die Parkassistenzvorrichtung (29) mindestens einen Abstandssensor umfasst.

6. Kraftfahrzeug nach einem der vorhergehenden Ansprüche, **dadurch gekennzeichnet, dass** die Parkassistenzvorrichtung (29) mindestens einen Ultraschallsensor umfasst.

7. Kraftfahrzeug nach einem der vorhergehenden Ansprüche, **dadurch gekennzeichnet, dass** die Parkassistenzvorrichtung (29) eine Rückfahrkamera umfasst.

8. Kraftfahrzeug nach einem der vorhergehenden Ansprüche, **dadurch gekennzeichnet, dass** eine zusätzliche Bremsleuchte an der ausfahrbaren Luftleitvorrichtung (3) angebracht ist.

## Claims

1. Motor vehicle, in particular passenger vehicle, having a spoiler (3) which is arranged in the rear area (2) and can be moved out of a retracted rest position (A) into an extended operating position (C), and having a parking aid device (29) which is mounted on the extendable spoiler (3) in such a way that it is concealed in the retracted rest position (A) of the spoiler (3), **characterized in that** the spoiler (3) has a drive (4) by means of which the spoiler (3) is extended using a control device as soon as a reverse gear is engaged, **in that** the spoiler (3) is connected in such a way that as soon as the reverse gear is engaged the spoiler is not extended completely but rather is moved only into an intermediate position (B), and **in that** the parking aid device (29) is not activated in the fully extended operating position (C) of the spoiler (3).

2. Motor vehicle according to Claim 1, **characterized in that** the parking aid device (29) is arranged on a transversely extending, rear edge area (28) of the extendable spoiler (3).

3. Motor vehicle according to one of the preceding claims, **characterized in that** the parking aid device (29) is inserted into a receptacle which is arranged on the rearside of the extendable spoiler (3).

4. Motor vehicle according to Claim 1, **characterized in that** the parking aid device (29) is connected in such a way that the parking aid device is activated as soon as the reverse gear is engaged.

5. Motor vehicle according to one of the preceding claims, **characterized in that** the parking aid device (29) comprises at least one distance sensor.

6. Motor vehicle according to one of the preceding claims, **characterized in that** the parking aid device (29) comprises at least one ultrasonic sensor.

7. Motor vehicle according to one of the preceding claims, **characterized in that** the parking aid device (29) comprises a reversing camera.

8. Motor vehicle according to one of the preceding claims, **characterized in that** an additional brake light is mounted on the extendable spoiler (3).

## Revendications

1. Véhicule automobile, en particulier véhicule de passagers, comprenant un dispositif de conduction d'air (3) disposé dans une région arrière (2), pouvant être déplacé d'une position de repos rentrée (A) dans une position de fonctionnement sortie (C), et comprenant un dispositif d'assistance au stationnement (29), qui est monté sur le dispositif de conduction d'air déployable (3) de telle sorte qu'il soit recouvert dans la position de repos rentrée (A) du dispositif de conduction d'air (3), **caractérisé en ce que** le dispositif de conduction d'air (3) présente un entraînement (4) qui permet de sortir le dispositif de conduction d'air (3) à l'aide d'un dispositif de commande dès qu'une vitesse de marche arrière est enclenchée, **en ce que** le dispositif de conduction d'air (3) est monté de telle sorte que le dispositif de conduction d'air, dès que la vitesse de marche arrière est enclenchée, ne soit pas complètement ressorti mais soit seulement déplacé dans une position intermédiaire (B), et **en ce que** le dispositif d'assistance au stationnement (29) n'est pas activé dans la position de fonctionnement complètement sortie (C) du dispositif de conduction d'air (3).

2. Véhicule automobile selon la revendication 1,
**caractérisé en ce que** le dispositif d'assistance au stationnement (29) est disposé dans une région de bord arrière (28) s'étendant transversalement du dispositif de conduction d'air déployable (3).

3. Véhicule automobile selon l'une quelconque des revendications précédentes, **caractérisé en ce que** le dispositif d'assistance au stationnement (29) est inséré dans un logement disposé du côté arrière du dispositif de conduction d'air déployable (3).

4. Véhicule automobile selon la revendication 1, **caractérisé en ce que** le dispositif d'assistance au stationnement (29) est monté de telle sorte que le dispositif d'assistance au stationnement soit activé dès que la vitesse de marche arrière est enclenchée.

5. Véhicule automobile selon l'une quelconque des revendications précédentes, **caractérisé en ce que** le dispositif d'assistance au stationnement (29) comprend au moins un capteur de distance.

6. Véhicule automobile selon l'une quelconque des revendications précédentes, **caractérisé en ce que** le dispositif d'assistance au stationnement (29) comprend au moins un capteur à ultrasons.

7. Véhicule automobile selon l'une quelconque des revendications précédentes, **caractérisé en ce que** le dispositif d'assistance au stationnement (29) comprend une caméra de marche arrière.

8. Véhicule automobile selon l'une quelconque des revendications précédentes, **caractérisé en ce qu'**un feu de frein supplémentaire est monté sur le dispositif de conduction d'air déployable (3).
